# DEMANDE DE BREVET EUROPEEN

(11) **EP 4 086 711 A1**
(43) Date de publication de la demande: **09.11.2022**
(21) Numéro de dépôt: 21172840.7
(22) Date de dépôt: 07.05.2021
(51) Int. Cl.: G04D 1/00, G04B 19/06, G04B 37/22, C04B 35/64, H04M 1/02, A44C 27/00, B28B 1/00

(54) **SUPPORT POUR UN PROCÉDÉ DE FRITTAGE D'UN CORPS, NOTAMMENT POUR L'HORLOGERIE**

(71) Demandeur: Comadur S.A., 2400 Le Locle (CH)
(72) Inventeur: BUBENDORF, Denis, 2022 Bevaix (CH); VUILLE, Pierry, 2338 Les Emibois (CH); CARTIER, Damien, 25000 Besançon (FR); AREDE, Paulo, 2300 La Chaux-de-Fonds (CH)
(74) Mandataire: ICB SA

(57) **Abrégé**

L'invention se rapporte à un support pour une étape de frittage d'un procédé de réalisation d'une pièce, notamment pour l'horlogerie, à partir d'un corps (2) vert présentant une forme initiale, le corps (2) subissant une rétractation de la forme initiale à une forme finale pendant l'étape de frittage, le support (1) présentant au moins une face de soutien (9) du corps (2) pendant l'étape de frittage, caractérisé en ce que la face de soutien (9) présente une géométrie en relief configurée pour soutenir le corps (2) de sa forme initiale à sa forme finale, afin qu'il garde sa forme et ses proportions avec un coefficient de rétractation lié au frittage.

L'invention se rapporte aussi à un procédé de frittage utilisant ce support.

## Description

### Domaine technique de l'invention

L'invention se rapporte à un support pour un procédé de frittage d'un corps, notamment pour l'horlogerie.

L'invention se rapporte également à procédé de frittage utilisant un tel support.

### Arrière-plan technologique

L'invention trouvera une application dans la fabrication d'un composant d'habillage destiné, préférentiellement mais non limitativement, au domaine de l'horlogerie. Un tel composant peut être par exemple une lunette de montre destinée à être rapportée sur une boite de montre, un maillon de bracelet, un cadran, une boite de montre, un élément de fermoir.

L'invention trouvera aussi une application dans la fabrication de composants d'habillage utilisés dans les domaines, de façon non exhaustive, de la téléphonie mobile et cellulaire, des terminaux informatiques notamment portables, par exemple pour former des coques de téléphones portables ou de tablettes, ou encore dans le domaine de la joaillerie ou bien de l'art de la table.

L'invention vise notamment des éléments constitués en des matériaux durs, à savoir résistants aux chocs et aux rayures. Ces matériaux durs peuvent être notamment de types céramiques techniques. En outre, chaque élément peut être constitué en dioxyde de zirconium ou « zircone », en dioxyde d'aluminium ou « alumine », en encore en un matériau composite intégrant un support en céramiques et une matrice métallique ou « cermet ». Chaque élément du composant d'habillage de l'invention peut aussi être constitué en saphir ou rubis synthétique.

Pour fabriquer ces pièces, on utilise un procédé comprenant les étapes suivantes :
- réalisation d'un précurseur à partir d'un mélange d'au moins un matériau en poudre avec un liant ;
- formation d'un corps vert par injection par injection dans un moule ou par pressage,
- frittage dudit corps vert afin de le durcir et d'obtenir la pièce souhaitée;

Cette dernière étape est destinée à fritter le corps vert afin de former un corps en céramique. Préférentiellement selon l'invention, l'étape de frittage peut comporter une pyrolyse, par exemple par un déliantage thermique.

Pendant l'étape de frittage, le corps subit une diminution du volume compte tenu d'un coefficient de rétractation dû à l'évaporation du liant et à l'agglomération de la poudre.

Cependant, l'inconvénient de ce procédé est que le corps peut se déformer pendant la rétractation. Lorsqu'il se rétracte, le corps peut par exemple perdre sa forme à cause de la gravité. En outre, selon le matériau utilisé pour former la pièce, le coefficient de rétractation change.

Ainsi, il est généralement nécessaire d'ajouter une étape d'usinage de la pièce pour finaliser la pièce définitive. Par conséquent, le procédé est allongé et l'on perd de la matière qu'il faut ajouter pour s'assurer des dimensions finales nécessaires.

Un autre inconvénient vient de la nature du matériau utilisé pour le corps. Selon le matériau choisi, le coefficient de rétractation n'est pas le même. Ainsi, si l'on fabrique la même pièce avec des matériaux différents, il faut prévoir de dimensionner le corps vert différemment pour obtenir un corps final identique. Ceci ajoute de la complexité à l'étape de frittage, et la nécessité d'ajouter une étape d'usinage pour dimensionner le corps final, ainsi que des risques de déformation supplémentaire.

### Résumé de l'invention

L'invention a pour but de remédier aux inconvénients précités, et vise à fournir un support de pièce pour une étape de frittage évitant les problèmes précités.

A cette fin, l'invention se rapporte à un support pour une étape de frittage d'un procédé de réalisation d'une pièce, notamment pour l'horlogerie, à partir d'un corps vert présentant une forme initiale, le corps subissant une rétractation de la forme initiale à une forme finale pendant l'étape de frittage, le support présentant au moins une face de soutien du corps pendant l'étape de frittage.

Le support est remarquable en ce que la face de soutien présente une géométrie en relief configurée pour soutenir le corps de sa forme initiale à sa forme finale, afin qu'il garde sa forme et ses proportions avec un coefficient de rétractation lié au frittage.

Ainsi, d'une part le support permet de garder les proportions de la forme initiale du corps et évite que le corps ne se déforme pendant l'étape de frittage. D'autre part, il permet d'être utilisé pour des corps formés de matériaux en céramique divers, qui ont des coefficients de rétractions différents les uns des autres.

Selon une forme de réalisation particulière de l'invention, la face de soutien comprend au moins deux parties agencées chacune sur deux niveaux différents, chaque partie étant en contact avec le corps au cours du frittage.

Selon une forme de réalisation particulière de l'invention, une partie est destinée à être en contact avec le corps dans sa forme finale et pas dans sa forme initiale.

Selon une forme de réalisation particulière de l'invention, les deux parties sont destinées à être en contact avec le corps dans sa forme initiale et dans sa forme finale.

Selon une forme de réalisation particulière de l'invention, la face de soutien comprend une partie centrale et deux parties latérales.

Selon une forme de réalisation particulière de l'invention, la face de soutien a une rugosité d'indice Ra supérieur à 1, de préférence supérieur à 3, voire supérieure à 4, pour permettre le glissement du corps pendant la rétractation.

Selon une forme de réalisation particulière de l'invention, la partie centrale est surélevée par rapport aux parties latérales.

Selon une forme de réalisation particulière de l'invention, la partie centrale forme un fond, les parties latérales étant relevées par rapport à la partie centrale.

Selon une forme de réalisation particulière de l'invention, les parties latérales sont destinées à être en contact avec le corps dans sa forme initiale et dans sa forme finale.

Selon une forme de réalisation particulière de l'invention, la partie centrale est destinée à être en contact avec le corps dans sa forme finale et pas dans sa forme initiale.

Selon une forme de réalisation particulière de l'invention, la partie centrale est destinée à être en contact avec le corps dans sa forme finale et dans sa forme initiale.

Selon une forme de réalisation particulière de l'invention, la face de soutien est configurée pour être agencée par rapport à l'axe de la gravité pour éviter le risque de déformation engendrée par la gravité.

Selon une forme de réalisation particulière de l'invention, le relief du support est configuré pour accompagner la rétractation du corps tout au long de l'étape de frittage et conserver ses proportions pendant qu'il se rétracte.

Selon une forme de réalisation particulière de l'invention, le support comprend une poudre appliquée sur la face de soutien pour permettre le glissement du corps pendant la rétractation.

L'invention se rapporte également à un procédé de frittage d'un corps vert, notamment pour l'horlogerie, le corps vert présentant une forme initiale, le procédé comprenant les étapes suivantes :
- disposer le corps vert sur un support selon l'invention, de sorte que le corps vert soit au moins en partie en contact avec une première partie de la face de soutien du support,
- fritter le corps vert sur le support de manière à ce qu'il se rétracte de sa forme initiale à une forme finale, le corps obtenu étant au moins en partie en contact avec une seconde partie de la face de soutien du support, la seconde partie étant différente de la première.

### Brève description des figures

D'autres particularités et avantages ressortiront clairement de la description qui en est faite ci-après, à titre indicatif et nullement limitatif, en référence aux dessins annexés, dans lesquels :
- la figure 1 est une représentation schématique d'un corps dans sa forme initiale avant l'étape de frittage, le corps étant agencé sur un support selon un premier mode de réalisation de l'invention ;
- la figure 2 est une représentation schématique d'un corps dans sa forme finale après l'étape de frittage, le corps étant agencé sur le support du premier mode de réalisation de l'invention ;
- la figure 3 est une représentation schématique d'un corps dans sa forme initiale avant l'étape de frittage, le corps étant agencé sur un support selon un deuxième mode de réalisation de l'invention;
- la figure 4 est une représentation schématique d'un corps dans sa forme finale après l'étape de frittage, le corps étant agencé sur le support du deuxième mode de réalisation de l'invention ;
- la figure 5 est une représentation schématique d'un corps dans sa forme finale après l'étape de frittage, le corps étant agencé sur un support selon un troisième mode de réalisation de l'invention ;
- la figure 6 est une représentation schématique d'un corps en forme de fils ;
- la figure 7 est une représentation schématique d'un support selon un quatrième mode de réalisation de l'invention, le support permettant la réalisation des fils de la figure 6 ;
- la figure 8 est une représentation schématique d'une vue en coupe d'une partie du support de la figure 7, et d'un fil dans sa forme initiale ;
- la figure 9 est une représentation schématique d'une vue en coupe d'une partie du support de la figure 7, et d'un fil dans sa forme finale ;
- la figure 10 est une représentation schématique d'une vue en coupe d'une première variante d'une partie du support de la figure 7, et d'un fil dans sa forme finale ;
- la figure 11 est une représentation schématique d'une vue en coupe d'une deuxième variante d'une partie du support de la figure 7.

### Description détaillée de l'invention

Comme expliqué ci-dessus, l'invention se rapporte à un support de pièce pour une étape de frittage d'un procédé de réalisation d'une pièce, notamment pour l'horlogerie. L'étape de frittage consiste à fritter un corps vert présentant une forme initiale. Pendant le frittage, le corps subit une rétractation qui lui donne une forme finale avec un coefficient de rétractation par rapport à la forme initiale. Généralement, la forme initiale a des proportions qui correspondent à la forme de la pièce que l'on souhaite obtenir après l'étape de frittage.

Pour conserver cette forme, on utilise un support présentant au moins une face de soutien du corps pendant l'étape de frittage, la face de soutien présentant une géométrie en relief. Le relief est configuré pour soutenir le corps dans sa forme initiale et dans sa forme finale, de sorte que le corps garde ses proportions avec un coefficient de rétractation. Le relief du support permet d'accompagner la rétractation du corps tout au long de l'étape de frittage pour garder la forme du corps pendant qu'il se rétracte, et ce quel que soit le matériau choisi.

Le support est de préférence monobloc et comprend, par exemple, de l'Al₂O₃, de préférence en totalité. Le corps vert est par exemple en céramique ou en métal.

La face de soutien comprend une partie de glissement, sur laquelle le corps peut se déplacer lorsqu'il se rétracte. Pour cela, la face de soutien a une rugosité d'indice Ra supérieur à 1, de préférence supérieur à 3, voire supérieur à 4.

Alternativement, un spray de poudre est appliqué sur la face de soutien pour permettre le glissement du corps pendant la rétractation.

De préférence, la face de soutien est déterminée pour être agencée par rapport à l'axe de la gravité pour éviter le risque de déformation engendrée par la gravité.

La face de soutien comprend au moins deux parties agencées chacune sur deux niveaux différents, chaque partie étant en contact avec le corps au cours du frittage. On entend par niveaux différents, le fait qu'une partie est plus haute ou plus basse que l'autre dans le relief de la face de soutien.

Selon la variante de réalisation, l'une des parties est destinée à être en contact avec le corps dans sa forme finale et pas dans sa forme initiale. Alternativement, les deux parties sont destinées à être en contact avec le corps dans sa forme initiale et dans sa forme finale.

Dans les figures suivantes, différents modes de réalisation de supports sont exposés.

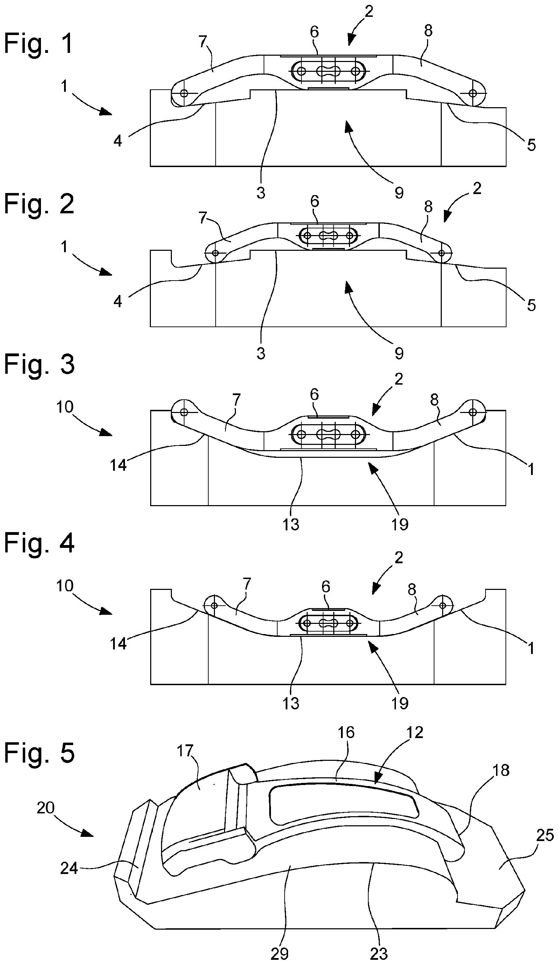

La face de soutien du support de la figure 1, comprend une partie centrale 3 et deux parties latérales 4, 5. Les parties latérales ont de préférence un indice de rugosité permettant le glissement. La partie centrale a de préférence également une telle rugosité. La partie centrale 3 est sensiblement horizontale et est surélevée par rapport aux parties latérales 4, 5, qui descendent en pente douce depuis la partie centrale 3. Les jonctions de la partie centrale 3 et des parties latérales 4, 5 forment une marche. Les parties centrales et latérales ont des dimensions choisies pour permettre la rétractation du corps, quel que soit le matériau sélectionné.

Le corps vert est par exemple destiné à former un élément d'un boucle d'un bracelet, et comprend une portion épaisse 6 au centre et deux portions fines 7, 8 de part et d'autre pour former un corps monobloc. Les portions fines 7, 8 sont recourbées vers le bas en descendant en dessous du niveau de la portion centrale 6. Le corps vert est disposé sur le support, de sorte que la portion épaisse 6 repose sur la partie centrale 3 de la face de soutien, et que les portions fines 7, 8 reposent chacune sur une partie latérale 4, 5 de la face de soutien.

Pendant l'étape de frittage, le corps se rétracte jusqu'à sa forme finale, représentée sur la figure 2. Le volume du corps final est moindre que le volume du corps vert initial à cause de la rétractation, mais les proportions et la forme du corps 2 sont sensiblement conservées. Les extrémités des portions fines 7, 8 du corps 2 sont plus proches de la partie centrale 3 que des parties latérales 4, 5.

Grâce au support, le corps ne se déforme pas pendant le frittage. Le relief de la face de soutien s'oppose à la déformation du corps provoqué par la gravité. Pour cela, le support est configuré pour orienter la face de soutien perpendiculairement au sens de la gravité.

Le deuxième mode de réalisation du support des figure 3 et 4 montre un support 10 pour une le frittage d'une boucle posée dans l'autre sens par rapport au support 1 de la figure 1 ou 2.

Le support 10 comprend une face de soutien munie d'une partie centrale 13 formant un fond et deux parties latérales 14, 15 relevées. Le corps 2 vert est identique à celui du premier mode de réalisation, mais il repose à l'envers sur le support. Ainsi, les extrémités des portions fines 7, 8 sont plus hautes que la portion épaisse 6.

Les parties latérales 14, 15 sont destinées être en contact avec le corps dans sa forme initiale et dans sa forme finale. Ainsi, le corps 2 est soutenu grâce aux portions fines 7, 8 en contact avec les parties latérales 14,15 de la face de soutien. La portion épaisse 6 est en suspension dans la forme initiale du corps.

Après l'étape de frittage, représenté sur la figure 4, le corps 2 rétracté a un volume diminué. Ainsi, la portion épaisse 6 repose sur la partie centrale 13 de la face de soutien. Dans ce mode de réalisation, la partie centrale 13 est destinée à être en contact avec le corps 2 dans sa forme finale et pas dans sa forme initiale.

Le relief de la face de soutien est configuré pour correspondre au moins en partie à la forme finale du corps 2 sur son côté inférieur. Chaque partie latérale 14, 15 forme un angle oblique avec la partie centrale, l'angle correspondant à l'angle formée par une portion fine 7, 8 avec la portion épaisse 6 de la forme du corps 2.

Sur la figure 5, un troisième mode de réalisation d'un support 20 dont la partie centrale 23 est bombée ou convexe, et sur laquelle repose un corps 12 dans sa forme finale. Le corps 12 est une partie de bracelet 16 muni d'une boucle 17 et d'une extrémité épaisse 18, qui est dans sa forme finale rétractée sur la figure 5. Le support 20 comprend une première partie latérale 14 relevée, pour retenir la boucle 17 dans la forme initiale du corps 12. Le support 20 comprend une deuxième partie latérale 25 étagée vers bas par rapport à la partie centrale 23. L'extrémité épaisse 18 du bracelet repose sur cette deuxième partie latérale 25 dans sa forme initiale et dans sa forme finale. Après rétractation dans sa forme finale, l'extrémité épaisse 18 touche contre la marche définie par l'étagement entre la partie centrale 23 et la deuxième partie latérale 25.

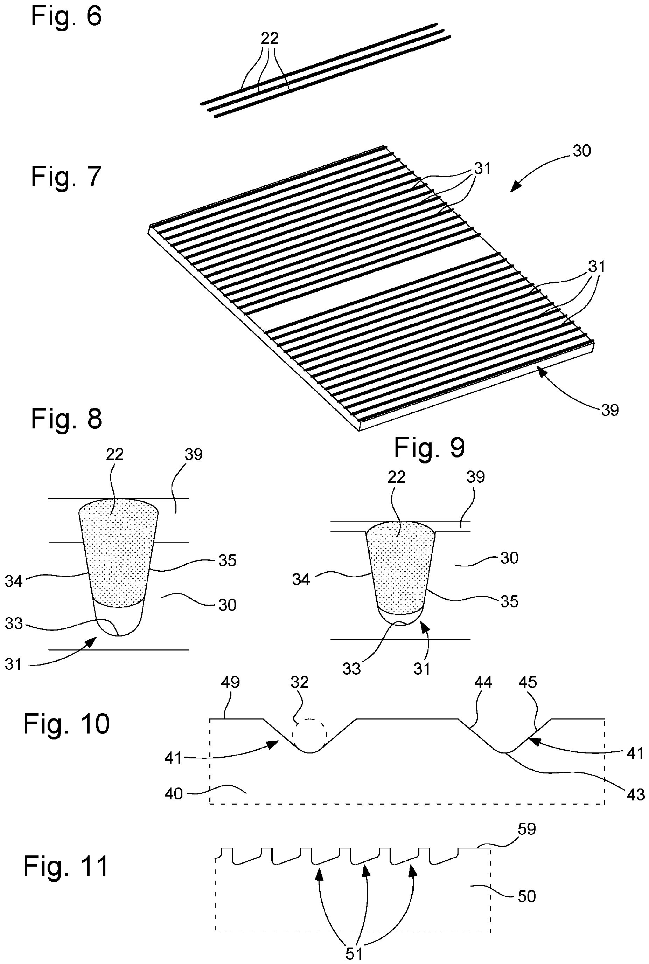

Dans le quatrième mode de réalisation de la figure 7, le support 30 est configuré pour permettre la formation de fils droits allongés 22, représentée sur la figure 6. Le corps vert initial a une forme de fil allongé, que l'on souhaite conserver après le frittage, et qui sont très difficiles à conserver sans support.

Le support de la figure 7 comprend une pluralité de gouttières 31 pour maintenir les fils 22 pendant le frittage, chaque gouttière étant destiné à un fil. Les corps verts en forme de fils sont disposés dans les gouttières 31 pour empêcher leur déformation pendant le frittage.

Chaque gouttière est munie d'une partie centrale formant le fond de la gouttière et de deux parties latérales relevées formant les bords de la gouttière. Les parties latérales s'écartent depuis la partie centrale.

Les figures 8 et 9 montrent un premier profil de gouttières selon une première variante, le corps 22 étant dans sa forme initiale sur la figure 8 et dans sa forme finale sur la figure 9. Sur la figure 8, le fil 22 repose sur les deux parties latérales 34, 35 avant l'étape de frittage. Ainsi, le fil ne repose pas sur la partie centrale 33 de la face de soutien dans sa forme initiale. La largeur du fil 22 est plus grande que la largeur de la partie centrale 33.

Pendant le frittage, le corps 22 se rétracte pour aboutir à une forme finale du corps, ici un fil allongé. Après rétractation du fil, sa largeur est plus petite que la distance entre les deux parties latérales, de sorte qu'il glisse au dans la gouttière, jusqu'à être en contact avec la partie centrale 33 de la face de soutien, comme le montre la figure 9.

Grâce au relief de la face de soutien de chaque gouttière du support, le fil reste droit et ne se déforme pas.

Les figures 10 et 11 montrent des variantes de gouttières 41, 51 de supports 40, 50, les gouttières 41, 51 ayant d'autres profils.

Les gouttières 41 de la figure 10 ont une forme évasée, par exemple avec un angle d'au moins 80°, voire d'au moins 100°, et un fond arrondi 43. Dans sa forme initiale, le corps cylindrique 32 repose sur les parties latérales 44, 45, et dans sa forme finale, le corps 32 repose sur le fond arrondi 43. Ainsi, on conserve la forme cylindrique du fil pendant l'étape de frittage.

Dans la variante de la figure 11, les gouttières 51 ont une forme avec un fond incliné.

L'invention se rapporte également à un procédé de frittage d'un corps vert, notamment pour l'horlogerie, le corps vert présentant une forme initiale.

Le procédé comprend une première étape dans laquelle on dispose le corps vert sur un support muni d'une face de soutien en relief selon l'invention, de sorte que le corps vert soit au moins en partie en contact avec une première partie de la face de soutien du support.

L'invention comprend une deuxième étape dans laquelle on fritte le corps vert sur le support, de manière à ce qu'il se rétracte de sa forme initiale à une forme finale. Dans sa forme finale, le corps est au moins en partie en contact avec une seconde partie de la face de soutien du support, la seconde partie étant différente de la première.

La première et la deuxième partie peuvent être orientées différemment l'une de l'autre, notamment par rapport à la gravité.

De préférence, le corps glisse sur le support de sa forme initiale à sa forme finale pendant la deuxième étape.

## Revendications

1. Support (1, 10, 20, 30, 40, 50) pour une étape de frittage d'un procédé de réalisation d'une pièce, notamment pour l'horlogerie, à partir d'un corps (2, 12, 22, 32) vert présentant une forme initiale présentant une forme dont le en relief, le corps (2, 12, 22, 32) subissant une rétractation de la forme initiale à une forme finale pendant l'étape de frittage, le support (1, 10, 20, 30, 40, 50) présentant au moins une face de soutien (9, 19, 29, 39, 49, 59) du corps (2, 12, 22, 32) pendant l'étape de frittage, **caractérisé en ce que** la face de soutien (9, 19, 29, 39, 49, 59) présente une géométrie en relief configurée pour soutenir le corps (2, 12, 22, 32) de sa forme initiale à sa forme finale, afin qu'il garde sa forme et ses proportions avec un coefficient de rétractation lié au frittage.

2. Support selon la revendication 1, **caractérisé en ce que** la face de soutien (9, 19, 29, 39, 49, 59) comprend au moins deux parties (3, 4, 5, 13, 14, 15, 23, 24, 25, 33, 34, 35, 43, 44, 45) agencées chacune sur deux niveaux différents, chaque partie étant en contact avec le corps au cours du frittage.

3. Support selon la revendication 2, **caractérisé en ce qu'**une partie est destinée à être en contact avec le corps (2, 12, 22, 32) dans sa forme finale et pas dans sa forme initiale.

4. Support selon la revendication 2, **caractérisé en ce que** les deux parties (14, 15, 34, 35, 44, 45) sont destinées à être en contact avec le corps (2, 12, 22, 32) dans sa forme initiale et dans sa forme finale.

5. Support selon la revendication 3 ou 4, **caractérisé en ce que** la face de soutien (9, 19, 29, 39, 49, 59) comprend une partie centrale (3, 13, 23, 33, 43) et deux parties latérales (4, 5, 14, 15, 24, 25, 34, 35, 44, 45).

6. Support selon la revendication 5, **caractérisé en ce que** la partie centrale (13, 33, 43) forme un fond, les parties latérales (14, 15, 34, 35, 44, 45) étant relevées par rapport à la partie centrale (13, 33, 43).

7. Support selon la revendication 5, **caractérisé en ce que** la partie centrale (3, 23) est surélevée par rapport aux parties latérales (4, 5, 24, 25).

8. Support selon la revendication 6, **caractérisé en ce que** la partie centrale (3, 13, 23, 33, 43) est destinée à être en contact avec le corps (2, 12, 22, 32) dans sa forme finale et pas dans sa forme initiale.

9. Support selon la revendication 7, **caractérisé en ce que** les parties latérales (14, 15, 34, 35, 44, 45) sont destinées à être en contact avec le corps (2, 12, 22, 32) dans sa forme initiale et dans sa forme finale.

10. Support selon la revendication 7 ou 9, **caractérisé en ce que** la partie centrale (3, 13, 23, 33, 43) est destinée à être en contact avec le corps (2, 12, 22, 32) dans sa forme finale et dans sa forme initiale.

11. Support selon l'une, quelconque, des revendications précédentes, **caractérisé en ce que** la face de soutien a une rugosité d'indice Rₐ supérieur à 1, de préférence supérieur à 3, voire supérieur à 4, pour permettre le glissement du corps pendant la rétractation.

12. Support selon l'une, quelconque, des revendications précédentes, **caractérisé en ce qu'**il comprend une poudre appliquée sur la face de soutien (9, 19, 29, 39, 49, 59) pour permettre le glissement du corps (2, 12, 22, 32) pendant la rétractation.

13. Support selon l'une, quelconque, des revendications précédentes, **caractérisé en ce que** la face de soutien (9, 19, 29, 39, 49, 59) est configurée pour être agencée par rapport à l'axe de la gravité pour éviter le risque de déformation engendrée par la gravité.

14. Support selon l'une, quelconque, des revendications précédentes, **caractérisé en ce que** le relief du support (1, 10, 20, 30, 40, 50) est configuré pour accompagner la rétractation du corps (2, 12, 22, 32) tout au long de l'étape de frittage et conserver ses proportions pendant qu'il se rétracte.

15. Procédé de frittage d'un corps vert, notamment pour l'horlogerie, le corps vert présentant une forme initiale, le procédé comprenant les étapes suivantes :
- disposer le corps vert sur un support selon l'une quelconque des revendications précédentes, de sorte que le corps vert soit au moins en partie en contact avec une première partie d'une face de soutien du support,
- fritter le corps vert sur le support de manière à ce qu'il se rétracte de sa forme initiale à une forme finale, le corps obtenu étant au moins en partie en contact avec une seconde partie d'une face de soutien du support, la seconde partie étant différente de la première.
